# EUROPÄISCHE PATENTSCHRIFT

(11) **EP 2 030 693 B1**
(45) Veröffentlichungstag und Bekanntmachung des Hinweises auf die Patenterteilung: **19.10.2011**
(21) Anmeldenummer: 07115322.5
(22) Anmeldetag: 30.08.2007
(51) Int. Cl.: B03B 9/06

(54) **Aufbereitung von Gipsplattenabfällen zum Zwecke der hochwertigen Wiederverwertung der Einzelkomponenten Gips und Karton**
Processing of plasterboard waste for premium reutilisation of the individual components plaster and cardboard
Préparation de déchets de carreaux de plâtre pour le recyclage hautement qualitatif des composants de plâtre et de carton

(43) Veröffentlichungstag der Anmeldung: 04.03.2009
(73) Patentinhaber: GFR Gesellschaft für die Aufbereitung und Verwertung von Reststoffen mbH, 97080 Würzburg (DE)
(72) Erfinder: Demmich, Jörg, 97084 Würzburg (DE); Weissfolg, Eckhard, Dr., 97234 Reichenberg-Lindflur (DE); Leuchs, Matthias, 97082 Würzburg (DE); Zingk, Michael, Dr., 30559 Hannover (DE)
(74) Vertreter: von Kreisler Selting Werner

(56) Entgegenhaltungen:
- EP-A- 0 073 864
- EP-A- 1 712 303
- WO-A-03/082485
- DE-A1- 19 625 538
- JP-A- 2004 313 896
- US-A- 6 164 572

## Beschreibung

Die vorliegende Erfindung betrifft ein Verfahren zur Wiederverwertung von Gipsplattenabfällen.

Gipskartonplatten sind ein umfangreich eingesetztes Baumaterial im Innenbereich von Gebäuden. Sie dienen zur Verkleidung von Wänden und Decken.

Typischerweise werden Gipskartonplatten hergestellt, in dem auf eine Kartonlage ein angemischtes, abbindefähiges Calciumsulfatprodukt in Breiform gebracht wird, woraufhin der Gipsbrei mit einer zweiten Kartonlage abgedeckt wird und nach dem ersten Abbinden geschnitten wird. Anschließend erfolgt eine Trocknung der Gipskartonplatten, um überschüssiges Wasser zu entfernen.

Bei der Herstellung von Gipskartonplatten entstehen Abfälle, die relativ sortenrein anfallen und teilweise einer Wiederverwendung zugeführt werden.

Große Mengen an Gipskartonplattenabfällen entstehen an der Baustelle beim Einbau der Platten. Diese werden vor Ort passend vom Innenausbauer geschnitten, wobei ganz erhebliche Abfallmengen entstehen können, die üblicherweise als Bauschutt entsorgt werden müssen. Noch größeren Mengen an Gipskartonplattenabfällen entstehen bei dem Abbruch von Gebäuden, in denen Gipskarton eingebaut war.

Im Gegensatz zu den Abfällen, die bei der Herstellung anfallen, sind die auf der Baustelle entstehenden Gipskartonplattenabfälle häufig mit weiterem Bauschutt verunreinigt. Bisher war es üblich, diesen Bauschutt auf Deponien einzulagern, was grundsätzlich wirtschaftlich nicht wünschenswert ist und teilweise auch als ein Umweltrisiko angesehen wird, da aus solchen Deponien Sulfate ausgelaugt werden können.

WO 03/082485 beschreibt ein Verfahren und eine Vorrichtung zur Trennung von Papier von Gipskartonplatten. Ein wesentliches Element ist die Verwendung eines Magneten zur Entfernung von Eisenverunreinigungen. Ziel des Verfahrens ist es, möglichst große Mengen Papier für die Wiedergewinnung zu erhalten.

EP 1 712 303 offenbart ebenfalls ein Verfahren zur Gewinnung des Papiers aus Gipskartonplatten durch Waschen der Ausgangsstoffe.

Die Art der Wiederverwertung des enthaltenen Gipses ist in beiden Dokumenten nicht beschrieben.

Die JP 2004 313896 A offenbart ein Verfahren zur Aufbereitung von Gipskartonplatten und gipskartonhaltigen Bauabfällen mit einer Vorzerkleinerung, einem Brechen auf einer Prallbrecheinrichtung sowie einem Auftrennen in eine Grobfraktion mit einer Korngröße von > 5 mm und eine verbleibende Feinfraktion.

Die EP-A-0 073 864 beschreibt ein Verfahren, bei dem eine Hammermühle, eingesetzt wird, das Auftrennen erfolgt in eine Grobfraktion mit einer Korngröße von > 5 mm und eine verbleibende Feinfraktion.

Aufgabe der vorliegenden Erfindung war es, insbesondere für den erhaltenen Gips eine sinnvolle Wiederverwertungsmöglichkeit zu erlangen.

Gelöst wird die Aufgabe durch ein Verfahren zur Aufbereitung von Gipskartonplatten und gipskartonhaltigen Bauabfällen mit folgenden Schritten:
a) Vorzerkleinerung auf ≤ 1.000 mm Kantenlänge
b) Brechen auf einer Prallbrecheinrichtung bei veränderlichen Spaltweiten, wobei die Spaltweite 2 bis 5 mm beträgt
c) Auftrennen in eine Grobfraktion mit einer Korngröße von > 20 bis > 40 mm und eine verbleibende Feinfraktion.

Erfindungsgemäß werden die Bauabfälle zunächst vorzerkleinert auf eine Kantenlänge von etwa 1 m oder weniger.

Gegebenenfalls kann vorher manuell eine Abtrennung von Holz, Betonteilen, Mauerwerk und/oder Metallteilen erfolgen.

Die vorzerkleinerten Abfälle werden dann auf einer Prallbrecheinrichtung gebrochen. Überraschenderweise hat sich in umfangreichen Vorversuchen herausgestellt, dass an die Konsistenz von Gipskartenplatten angepasste Prallbrecheinrichtungen in einem Arbeitsgang ein Gemisch aus feinkörnigem Gips und grobstückigem Karton erzeugen, das sich mit konventionellen Siebeanlagen leicht in Gips und Karton auftrennen lässt.Anschließend wird das erhaltene Produkt in eine Grob- und eine Feinfraktion aufgetrennt, wobei die Grobfraktion eine Korngröße > 20 mm aufweist. Es ist auch erfindungsgemäß, wenn die Trennung bei einer größeren Korngröße liegt, d.h. beispielsweise als Korngrößengrenze 25, 30, 40 mm oder ähnliche Bereiche.

Die beiden so erhaltenen Fraktionen werden als Grob- bzw. als Feinfraktion bezeichnet. Die Grobfraktion enthält den Großteil des Papier-/Kartonanteils.

In einer bevorzugten Ausführungsform wird die Feinfraktion in zwei Unterfraktionen unterteilt. Eine Unterteilungsgrenze ist beispielsweise eine Korngröße von 5 mm. Sie kann jedoch auch in einem anderen Bereich zwischen 1 und etwa 20 mm gewählt werden.

Die beiden Unterfraktionen werden im weiteren Text immer gemeinsam mit der Bezeichnung "Feinfraktion" bezeichnet; dies bedeutet, dass entweder die gesamte Feinfraktion oder eine der Unterfraktionen verwendet werden können.

Die erhaltene Feinfraktion eignet sich beispielsweise zur Herstellung von Gipsprodukten wie Putzen oder Gipsplatten. Die Feinfraktion kann auch zur Herstellung von Zement durch Zumahlen von Zementklinker oder zum Sulfatieren eines Zementrohmehlgemisches verwendet werden.

Eine weitere Einsatzmöglichkeit ist die Verwendung der Feinfraktion als Schwefelkomponente bei der Herstellung von Düngemitteln bzw. der direkte Einsatz als Calciumsulfatdünger.

Die Grobfraktion kann entweder direkt oder nach einer weiteren Aufbereitung der Altpapierverwertung zugeführt werden oder sie kann als Ersatzbrennstoff verwendet werden. Insbesondere wenn die Grobfraktion, die eine Mischung aus Papier/Karton und Gips enthält, einer weiteren Zerkleinerung unterzogen wird, kann sie gegebenenfalls nach Zumischen weiterer geeigneter Nebenprodukte aus industrieller Produktion sehr gut als besonders tierverträgliches und feuchtigkeitsbindendes Stalleinstreumaterial für die Hygienisierung von Tierställen verwendet werden.

Die erhaltene Feinfraktion erfüllt bevorzugt folgende Spezifikationen:

| Qualitätsparameter | bestimmt als | Dimension | Qualitätskriterien Grenzwerte |
|---|---|---|---|
| Freie Feuchte | H₂O | MA.-% | < 10 |
| Calciumsulfat-Dihydrat | CaSO₄x2H₂O | MA.-% | ≥ 80 |
| Chlorid | Cl | MA.-% | < 0,01 |
| Magnesiumsalze, wasserlöslich | MgO | MA.-% | < 0,02 |
| Natriumsalze, wasserlöslich | Na₂O | MA.-% | < 0,02 |
| Kaliumsalze, wasserlöslich | K₂O | MA.-% | < 0,02 |
| pH-Wert | | - | 5-9 |
| Toxische Bestandteile | | | Schadlos |
| | | | Orientierungswerte |
| organischer Kohlenstoff | TOC | MA.-% | < 2 |
| Farbe | Ry Lxaxbx | ./. | Weiß |
| Geruch | | | Neutral |

Es ist auch möglich, dass nach Schritt b) des erfindungsgemäßen Verfahrens eine Abtrennung von Metallen mittels eines Magneten erfolgt.

Typische Schlitzweiten für die Prallbrecheinrichtung liegen im Bereich von 2 bis 5 mm. In einer Ausführungsform weist die Prallbrecheinrichtung vier gleichlange Mitnehmerleisten auf.

Der erfindungsgemäße in der Feinfraktion erhaltene Gips weist eine Qualität auf, die im Wesentlichen der von Naturgips entspricht.

Die Qualität hängt dabei von der zur Zeit der Produktion der Platten (in Deutschland erst in den Sechzigerjahren als Baustoff eingeführt, als nur Naturgips verfügbar war) eingesetzten Gipsqualität sowie von der Sortenreinheit der als Input bei der Aufbereitung angelieferten Plattenabfälle ab. Wie oben bereits erläutert ist gegebenenfalls eine entsprechende Vorsortierung erforderlich. Die Feuchtigkeit, die für die Annahme des Gipses in der Gips- und Zementindustrie auf maximal 10 MA.-% begrenzt ist, wird im Zuge der Aufbereitung auf Grund der mechanischen Einwirkung mit Erzeugung von Reibungswärme sowie durch die feine Verteilung und gute Belüftung im Brecher und auf der Siebanlage mit Übergaben und Fallstrecken erfreulicherweise stark reduziert. Zudem nehmen gegebenenfalls im Freien gelagerte Plattenrückstände die Feuchtigkeit überwiegend über den Karton auf.

Die Erfindung wird durch die folgenden Beispiele näher erläutert.

### Beispiel 1:

Gut vorsortierte, sortenreine Gipskartonplatten aus dem Ausbau einer Gebäudes werden auf der Anlage, bestehend aus Prallbrecher und Doppeldecksiebeinrichtung gebrochen und in die Fraktionen <5 mm, 5-20 mm und > 20 mm aufgetrennt. Die Fraktionen < 5 mm und 5-20 mm fallen in einer Menge von 40 (Reinheitsgrad 82% Calciumsulfatdihydrat) beziehungsweise 50 MA.-% (Reinheitsgrad 86% Calciumsulfatdihydrat) der Inputmenge an, die Grobfraktion besteht aus Kartonstücken mit geringem Gipsanhaftungen und beträgt 10 MA.-% der Inputmenge.

Die Fraktion < 5 mm wird in der Gipskartonplattenproduktion verwertet, die Fraktion 5-20 mm in der Zementindustrie als Zumahlstoff (Abbinderegulierer) bei der Klinkervermahlung. Der Karton kann ebenfalls in der Gipskartonplattenherstellung für die Papierfaserverstärkung des Gipskerns eingesetzt werden.

### Beispiel 2:

Grob vorsortierte Gipskartonplattenabfälle aus dem Rückbau eines Gebäudes mit geringen Anteilen aus Porenbetonsteinen und Plastikfolien werden wie oben beschrieben aufbereitet. Der Reinheitsgrad der Feinfraktionen (Gips) beträgt aufgrund der Verunreinigung mit Feinanteil Porenbeton bei < 5 mm nur 72% und bei der 5-20 mm Fraktion 79% CaSO₄ x 2H₂O. Die Fraktion > 20 mm enthält mit Porenbetonbrocken und Plastikfolienstücken verunreinigten Karton. Die Porenbetonbrocken können über ein Schrägband, das im Winkel von ca. 45° gestellt ist, vom Karton und den Plastikfolienstücken durch Schwerkrafteinwirkung abgetrennt. Die schweren Brocken rollen auf dem Band zurück, der Karton verbleibt flach auf dem Band und wird nach oben befördert und abgeworfen. Danach kann der Porenbetonbruch spezifisch auf einer Bauschuttdeponie beseitigt oder einer höherwertigen Verwertung zugeführt werden. Die Karton- und Plastikfolienfraktion kann nach dieser Aufbereitung bei der Herstellung von Ersatzbrennstoff eingesetzt werden.

### Beispiel 3:

Ein Gemisch aus Gipskartonplatten aus dem Neubaubereich mit solchen aus dem Rückbau wird einer Vorsortierung zur Abtrennung von Porenbetonsteinen unterzogen und der Brech-/Siebanlage zugeführt. Es wird nur mit einem Siebdeck und einer Maschenweite von 20 mm in eine Feinfraktion (Gips mit einer Reinheit von 81,5%) und eine Grobfraktion (Karton) aufgetrennt. Der Gips (ca. 85% MA.-% der Aufgabenmenge) kann in der Gipsindustrie verwendet werden. Eine Teilmenge Gips wird aufgemahlen (90% < 1 mm) und als Schwefelkomponente zur Herstellung eines Kalkdüngers mit Schwefel für die Rapsdüngung eingesetzt. Der Karton wird mit bevorzugt 10 MA.-% eines geeigneten Schwefel-Calciumdüngers vermischt und als Einstreumaterial zur Stallhygienisierung (Liege- und Laufflächen) in Milchproduktionsanlagen verwertet.

## Patentansprüche

1. Verfahren zur Aufbereitung von Gipskartonplatten und gipskartonhaltigen Bauabfällen mit folgenden Schritten;
a) Vorzerkleinerung auf ≤ 1.000 mm Kantenlänge
b) Brechen auf einer Prallbrecheinrichtung bei veränderlichen Spaltweiten, wobei die Spaltweite 2 bis 5 mm beträgt
c) Auftrennen in eine Grobfraktion mit einer Korngröße von > 20 bis > 40 mm und eine verbleibende Feinfraktion.

2. Verfahren nach Anspruch 1, **dadurch gekennzeichnet, dass** die Feinfraktionen in eine Fraktion mit einer Korngröße < 5 mm und eine Fraktion mit einer Korngröße ≥ 5 mm aufgeteilt wird.

3. Verfahren nach Anspruch 1 oder 2, **dadurch gekennzeichnet, dass** die Pelhfraktion zur Herstellung von Gipsprodukten wie Putzen oder Gipsplatten verwendet wird.

4. Verfahren nach Anspruch 1 oder 2, **dadurch gekennzeichnet, dass** die Feinfraktion zur Herstellung von Zement durch Zumahlen zu Zementklinker oder zum Sulfatieren eines Zementrohmehtgemisches verwendet wird.

5. Verfahren nach Anspruch 1 oder 2, **dadurch gekennzeichnet, dass** die Feinfraktion als Schwefelkomponente bei der Herstellung von Düngemitteln oder als Calciumsulfatdünger verwendet wird.

6. verfahren nach mindestens einem der Anspräche 1 bis 5, **dadurch gekennzeichnet, dass** die Grobfraktion, gegebenenfalls nach weiterer Aufbereitung, der Altpapierverwertung zugeführt wird oder bei der Herstellung von Ersatzbrenfistoff verwendet wird.

7. Verfahren nach mindestens einem der Ansprüche 1 bis 6, **dadurch gekennzeichnet, dass** die Grobfraktion, gengebenenfails nach einer weiteren Aufbereitung, durch Zerkleinern auf eine Korngröße von < 20 mm, zur Herstellung von Stallelnstreumateriallen für die Hygienislerung von Tierstallungen verwendet wird.

8. Verfahren nach mindestens einem der Ansprüche 1 bis 7, **dadurch gekennzeichnet, dass** die Feinfraktion folgende Spezifikation erfüllt
| Quatitätsparmeter | bestimmt als | Dimension | Qualitätskriterion Grenzwerte |
|---|---|---|---|
| Freie Feuchte | H₂O O | MA.-% | < 10 |
| Calciumsulfat-Dihydrat | CaS₄x2H₂O | MA.-% | ≥ 80 |
| Chlorid | Cl | MA.-% | < 0.01 |
| Magnesiumsalze, wasserlöslich | MgO | MA.-% | < 0.02 |
| Natriumsalze, wasserlöslich | Na₂O | MA,-% | < 0,02 |
| Kaliumsalze, wasserlöslich | K₂O | MA.-% | < 0,02 |
| pH-Wert | | | |
| Toxische Bestandtelle | | | Sthadlos |
| | | | Orientierungswerte |
| organischer Kohlenstoff Farbe | TOC | MA-% | < 2 |
| | Ry Lxaxbx | ./. | WeiB |
| Geruch | | | Neutral |

9. Verfahren nach mindestens einem der Ansprüche 1 bis 8, **dadurch gekennzeichnet, dass** nach Schritt b) eine Abtrennung von Metallen mittels eines Magneten erfolgt.

10. verfahren nach mindestens einem der Ansprüche 1, bis 9, **dadurch gekennzeichnet, dass** die Prallbrecheinrichtung vier gleichlange Mitnehmerleisten aufweist,

11. Verfahren nach mindestens einem der Ansprüche 1 bis 10, **dadurch gekennzeichnet, dass** die Grobfraktion einer weiteren Aufbereitung zur Abtrennung von Steinen und Gipsbroken sowie sonstigen Schwerstoffen und sphärischen Partikeln von flachen Kartonetücken über ein steil gestelltes Schrägband unterzogen wird.

12. Verfahren nach mindestens einem der Ansprüche 1 bis 11, **dadurch gekennzeichnet, dass** vor Schritt a) eine Abtrennung von Holz, Betonteilen, Mauerwerk und/oder Metallteilen erfolgt, um ein möglichst sortenreines Ausgangsmaterial zu erhalten.

## Claims

1. A process for processing gypsum plaster boards and construction waste containing gypsum cardboard, comprising the following steps:
a) preliminary comminuting to an edge length of ≤ 1000 mm;
b) crushing on an impact crushing means with variable gap widths, the gap width being from 2 to 5 mm;
c) separating into a coarse fraction with a grain size of > 20 to > 40 mm and a remaining fine fraction.

2. The process according to claim 1, **characterized in that** said fine fraction is divided into a fraction with a grain size of < 5 mm and a fraction with a grain size of ≥ 5 mm.

3. The process according to claim 1 or 2, **characterized in that** said fine fraction is used for preparing gypsum products, such as plasters or gypsum boards.

4. The process according to claim 1 or 2, **characterized in that** said fine fraction is used for preparing cement by adding it to and milling it with cement clinker, or for sulfating a raw cement powder.

5. The process according to claim 1 or 2, **characterized in that** said fine fraction is used as a sulfur component in the preparation of fertilizers or as a calcium sulfate fertilizer.

6. The process according to at least one of claims 1 to 5, **characterized in that** said coarse fraction, optionally after further processing, is sent to recovered paper utilization, or used in the preparation of substitute fuel.

7. The process according to at least one of claims 1 to 6, **characterized in that** said coarse fraction, optionally after further processing, is used for preparing stable litter for the hygiene treatment of animal stables by comminuting to a grain size of < 20 mm.

8. The process according to at least one of claims 1 to 7, **characterized in that** said fine fraction meets the following specifications:
| Quality parameters | determined as | Dimension | Quality criteria Limits |
|---|---|---|---|
| Free moisture | H₂O | Mass % | < 10 |
| Calcium sulfate dihydrate | Ca-SO₄x2H₂ | Mass % ≥ | 80 |
| Chloride | Cl | Mass % | < 0.01 |
| Magnesium salts, water-soluble | MgO | Mass % | < 0.02 |
| Sodium salts, water-soluble | Na₂O | Mass % | < 0.02 |
| Potassium salts, water-soluble | K₂O | Mass % | < 0.02 |
| pH value | | - | 5 to 9 |
| Toxic components | | | unpolluted |
| | | | Guide values |
| Organic carbon | TOC | Mass % | < 2 |
| Color | Ry Lxaxbx | ./. | white |
| Smell | | | neutral |

9. The process according to at least one of claims 1 to 8, **characterized in that** step b) is followed by a separation of metals by means of a magnet.

10. The process according to at least one of claims 1 to 9, **characterized in that** said impact crushing means has four entraining bars of equal lengths.

11. The process according to at least one of claims 1 to 10, **characterized in that** said coarse fraction is subjected to further processing for the separation of stones and gypsum lumps and other heavy materials and spherical particles from flat cardboard pieces over a bias tape placed in a steep position.

12. The process according to at least one of claims 1 to 11, **characterized in that** a separation of wood, concrete parts, masonry and/or metal parts is effected before step a) in order to obtain a starting material that is of a single type to the highest possible extent.

## Revendications

1. Procédé de préparation de carreaux de plâtre et de déchets de construction contenant des carreaux de plâtre, comprenant les étapes suivantes :
a) pré-fragmentation à ≤ 1 000 mm de longueur de côté
b) concassage sur un équipement de concassage à percussion avec des largeurs d'interstices variables, la largeur d'interstice étant de 2 à 5 mm
c) séparation en une fraction grossière ayant une grandeur de grain de > 20 à > 40 mm et en une fraction fine restante.

2. Procédé selon la revendication 1, **caractérisé en ce que** la fraction fine est divisée en une fraction ayant une grandeur de grain < 5 mm et en une fraction ayant une grandeur de grain ≥ 5 mm.

3. Procédé selon la revendication 1 ou 2, **caractérisé en ce que** la fraction fine est utilisée pour la fabrication de produits de plâtre tels que des enduits ou des carreaux de plâtre.

4. Procédé selon la revendication 1 ou 2, **caractérisé en ce que** la fraction fine est utilisée pour la fabrication de ciment par broyage en clinker ou pour le sulfatage d'un mélange de farine brute de ciment.

5. Procédé selon la revendication 1 ou 2, **caractérisé en ce que** la fraction fine est utilisée en tant que composante de soufre lors de la fabrication de substances fertilisantes ou en tant qu'engrais de sulfate de calcium.

6. Procédé selon au moins l'une des revendications 1 à 5, **caractérisé en ce que** la fraction grossière, éventuellement après préparation supplémentaire, est conduite au recyclage du papier ou est utilisée lors de la fabrication de combustible de substitution.

7. Procédé selon au moins l'une des revendications 1 à 6, **caractérisé en ce que** la fraction grossière, éventuellement après une préparation supplémentaire, par fragmentation à une grandeur de grain de < 20 mm, est utilisée pour la fabrication de matériaux pour litière pour l'assainissement des abris pour animaux.

8. Procédé selon au moins l'une des revendications 1 à 7, **caractérisé en ce que** la fraction fine correspond à la spécification suivante
| Paramètres de qualité | Désignation | Dimension | Critères de qualité Valeurs limites |
|---|---|---|---|
| Humidité libre | H₂O | % quantitatif | < 10 |
| Dihydrate de sulfate de calcium | CaSO₄x2H₂O | % quantitatif | ≥ 80 |
| Chlorure | Cl | % quantitatif | < 0,01 |
| Sels de magnésium, solubles dans l'eau | MgO | % quantitatif | < 0,02 |
| Sels de sodium, solubles dans l'eau | Na₂O | % quantitatif | < 0,02 |
| Sels de potassium, K₂O solubles dans l'eau | | % quantitatif < 0,02 | |
| Valeur de pH | | - | 5 - 9 |
| Composants toxiques | | | Non dangereux |
| | | | Valeurs indicatives |
| Carbone organique | TOC | % quantitatif | < 2 |
| Couleur | Ry Lxaxbx | ./. | Blanc |
| Odeur | | | Neutre |

9. Procédé selon au moins l'une des revendications 1 à 8, **caractérisé en ce que**, après l'étape b), il est effectué une séparation de métaux au moyen d'un aimant.

10. Procédé selon au moins l'une des revendications 1 à 9, **caractérisé en ce que** l'équipement de concassage à percussion présente quatre barrettes d'entraînement de même longueur.

11. Procédé selon au moins l'une des revendications 1 à 10, **caractérisé en ce que** la fraction grossière est soumise à une autre préparation pour la séparation de pierres et de fragments de plâtre ainsi que d'autres matériaux lourds et de particules sphériques de morceaux de carton plats sur une bande oblique placée de façon très inclinée.

12. Procédé selon au moins l'une des revendications 1 à 11, **caractérisé en ce que**, avant l'étape a), il est effectué une séparation du bois, de parties en béton, de maçonnerie et/ou de parties métalliques afin d'obtenir un matériau de départ trié de la façon la plus pure possible.
